# EUROPÄISCHE PATENTSCHRIFT

(11) **EP 2 820 096 B1**
(45) Veröffentlichungstag und Bekanntmachung des Hinweises auf die Patenterteilung: **24.02.2016**
(21) Anmeldenummer: 13706033.1
(22) Anmeldetag: 27.02.2013
(51) Int. Cl.: C09D 133/04, C09D 175/04, C09D 167/00, C09D 7/00, C08K 5/101, C08K 5/06

(54) **PIGMENTIERTER BESCHICHTUNGSSTOFF SOWIE VERFAHREN ZUR HERSTELLUNG EINER MEHRSCHICHTLACKIERUNG UNTER EINSATZ DES PIGMENTIERTEN BESCHICHTUNGSSTOFFS**
PIGMENTED COATING MATERIAL AND METHOD FOR PRODUCING A MULTI-LAYER COATING USING THE PIGMENTED COATING MATERIAL
COMPOSITION DE REVÊTEMENT PIGMENTÉE ET PROCÉDÉ DE RÉALISATION D'UN REVÊTEMENT MULTICOUCHE AU MOYEN DE CETTE COMPOSITION DE REVÊTEMENT PIGMENTÉE

(30) Priorität: 28.02.2012 US 201261603989 P; 28.02.2012 EP 12157332
(43) Veröffentlichungstag der Anmeldung: 07.01.2015
(73) Patentinhaber: BASF Coatings GmbH, 48165 Münster (DE)
(72) Erfinder: LAVALAYE, Jorn, 97082 Würzburg (DE); KUNSZT, Carmen, 97762 Hammelburg (DE); LÖW, Norbert, 91413 Neustadt/Aisch (DE)
(86) Internationale Anmeldenummer: PCT/EP2013/053887
(87) Internationale Veröffentlichungsnummer: WO 2013/127826

(56) Entgegenhaltungen:
- WO-A1-2007/044767
- WO-A1-2010/121791

## Beschreibung

### Gebiet der Erfindung

Die vorliegende Erfindung betrifft pigmentierte Beschichtungsstoffe enthaltend spezielle Lösemittel. Die vorliegende Erfindung betrifft zudem ein Verfahren zur Herstellung von Mehrschichtlackierungen unter Einsatz des pigmentierten Beschichtungsmittels.

### Stand der Technik

Die bekannten lösungsmittelhaltigen Beschichtungsstoffe, insbesondere die sogenannten Basislacke und Klarlacke und die hiermit hergestellten ein- oder mehrschichtigen farb- und/oder effektgebenden Lackierungen weisen gute anwendungstechnische Eigenschaften auf.

Die stetig wachsenden technischen und ästhetischen Ansprüche des Marktes, insbesondere die Ansprüche der Automobilhersteller und ihrer Kunden, erfordern jedoch eine stetige Weiterentwicklung des bisher erreichten technischen und ästhetischen Niveaus.

Insbesondere müssen neue Beschichtungsmittel zur Verfügung gestellt werden, die einen im Vergleich zum Stand der Technik niedrigeren VOC aufweisen, sodass bei der Herstellung entsprechender Mehrschichtlackierungen weniger VOC-Emissionen auftreten und damit die Herstellung umweltfreundlicher gestaltet werden kann. Eine Senkung des VOC ist insbesondere durch eine Erhöhung des Festkörpers der jeweiligen Beschichtungsstoffe zu erreichen.

Eine Reduzierung von VOC-Emissionen kann aber beispielsweise auch durch eine Reduzierung der Schichtdicken von zur Herstellung von Mehrschichtlackierungen eingesetzten Beschichtungsmitteln, insbesondere lösungsmittelhaltigen unpigmentierten Beschichtungsmitteln, erfolgen.

Heutzutage werden beispielsweise High-Solid-Klarlacke (Klarlacke mit hohem Festkörper von vorzugsweise über 50 %) in der Regel in Schichtdicken von etwa 45-55 um lackiert, um einen guten Verlauf sowie einen sehr guten optischen Gesamteindruck (Appearance) zu erzielen. Eine Reduktion der Klarlackschichtdicke auf 35-40 µm kann zu einer Verminderung der VOC-Emissionen von etwa 5 g pro Quadratmeter lackierter Fläche führen.

Neben dem Aspekt der Umweltfreundlichkeit ist es jedoch von zentraler Bedeutung, dass gleichzeitig andere technische Eigenschaften und auch die ästhetischen Eigenschaften von Beschichtungsstoffen und von daraus hergestellten Mehrschichtlackierungen erhalten bleiben, wenn nicht gar verbessert werden.

Insbesondere sollen die durch die bekannten Basis- und Klarlacke im Rahmen der Herstellung von Mehrschichtlackierungen erzielten Vorteile nicht verloren gehen, sondern zumindest in der gleichen, vorzugsweise einer stärkeren Ausprägung erhalten bleiben.

Mehrschichtlackierungen, umfassend Basislack und Klarlack, sind in der Automobilindustrie weit verbreitet. Sie werden wegen ihrer hervorragenden Eigenschaftsprofile, wie Kratz-, Chemikalien- und Wetterbeständigkeit sowie hohem Glanz eingesetzt.

Die bei der Herstellung solcher Mehrschichtlackierungen aus Gründen des Umweltschutzes eingesetzten Klarlacke mit hohem Festkörper (niedrigem VOC), die trotzdem die vom Kunden geforderte hohe Kratzbeständigkeit besitzen, basieren überwiegend auf carbamathaltigen Bindemittelsystemen, die in Kombination mit monomeren Vernetzungsharzen wie Hexa(methoxymethyl)melamin (HMMM) oder gemischt-veretherten Melaminen und weiteren polymerisierbaren Bindemitteln ein dichtes Netzwerk bilden können.

Die bei der Herstellung von Mehrschichtlackierungen eingesetzten Basislacke enthalten in der Regel ein polymerisierbares Bindemittel und einen Vernetzer. Häufig besitzt das polymerisierbare Bindemittel dabei hydroxyfunktionelle Gruppen an einem polymeren Grundgerüst. Als Vernetzer werden monomere Vernetzungsharze wie Hexa(methoxymethyl)melamin (HMMM) oder gemischt-veretherte Melamine eingesetzt.

Mehrschichtlackierungen werden beispielsweise dadurch hergestellt, dass nach Vorlackierung eines pigmentierten Basislackes und kurzer Ablüftzeit ohne Einbrennschritt (Nass-in-Nass-Verfahren) ein Klarlack überlackiert wird und anschließend Basislack und Klarlack zusammen eingebrannt werden.

Auch im Rahmen des Nass-in-Nass-Verfahrens besitzt die Reduzierung von VOC-Emissionen bei der Herstellung von Mehrschichtlackierungen eine hohe Relevanz. Durch den Wechsel von Medium-Solid-Basislack-Systemen mit einem Festkörperanteil zwischen 20-30 % zu sogenannten High-Solid-Basislack-Systemen mit einem Festkörperanteil größer 35 % im applikationsfähigen Zustand (Spritzviskosität) wird eine signifikante VOC-Reduktion beim Verarbeitungsprozess erreicht. Zudem bedeutet eine Erhöhung des Festkörpers um etwa 5 bis 10 % im Rahmen industrieller Lackierprozesse bereits eine enorme Einsparung von absolut einzusetzenden und daher bei der Verarbeitung in die Umwelt abgegebenen organischen Lösemitteln. Eine weitere Reduktion der Gesamt-Lösungsmittel-Emissionen kann durch eine Verringerung der Klarlackschichtdicke erfolgen.

Bei der Verringerung der Klarlackschichtdicke ist insbesondere problematisch, dass die Verlaufseigenschaften und somit auch die optische Qualität der hergestellten Mehrschichtlackierungen deutlich herabgesetzt sind.

Von Vorteil wäre somit ein pigmentiertes Beschichtungsmittel, insbesondere ein Basislack, der auch bei niedrigen Klarlackschichtdicken von auf dem pigmentierten Lack aufgetragenen Klarlacken gute Verlaufseigenschaften sowie einen sehr guten optischen Gesamteindruck der hergestellten Mehrschichtlackierungen ermöglicht, der aber gleichzeitig keine Verschlechterung von weiteren Verarbeitungs-, Applikations- und insbesondere technologischen Eigenschaften der eingesetzten Beschichtungsmittel sowie der hergestellten Mehrschichtlackierungen nach sich zieht. Zudem wäre es von Vorteil, wenn der Basislack selbst einen hohen Festkörpergehalt aufweist, um dadurch die Herstellung von Mehrschichtlackierungen noch umweltfreundlicher zu gestalten.

### Aufgabe

Der vorliegenden Erfindung lag daher die Aufgabe zugrunde, pigmentierte Beschichtungsmittel zur Verfügung zu stellen, die es gestatten, Mehrschichtlackierungen mit hervorragenden optischen Eigenschaften, insbesondere Verlaufseigenschaften, herzustellen. Bei der Herstellung dieser optisch hochwertigen Mehrschichtlackierungen soll es zudem möglich sein, die eingesetzten Klarlacke in nur niedriger Schichtdicke zu applizieren und damit zu einer Verminderung von VOC-Emissionen beizutragen.

Von hoher Relevanz war zudem, dass die genannten Vorteile auch bei pigmentierten Beschichtungsmitteln mit einem höheren Festkörpergehalt und gegebenenfalls auch bei einem höheren Pigment-Bindemittel-Verhältnis bei Spritzviskosität gewährleistet werden können. Dabei sollen aber die durch die bekannten Basislacke und die hieraus hergestellten Basislackierungen erzielten Vorteile nicht verloren gehen, sondern zumindest in der gleichen, vorzugsweise einer stärkeren Ausprägung erhalten bleiben.

Die entsprechenden Basislacke und die daraus hergestellten Basislackierungen sollen daher insbesondere einen guten Haze, das heißt keinen Glanzschleier, aufweisen. Ferner sollen die Basislackierungen frei von Lackstörungen wie Rissbildungen (Mudcracking), Hell-Dunkel-Schattierungen (Wolken) und Stippen sein. Darüber hinaus sollen die resultierenden Beschichtungen keine optischen Fehlstellen wie beispielsweise Schleifriefen zeigen und eine zufriedenstellende Haftung zum Klarlack aufweisen.

### Lösung der Aufgabe

Es wurde gefunden, dass die oben genannten Aufgaben gelöst werden konnten durch ein lösemittelbasiertes pigmentiertes Beschichtungsmittel enthaltend
(A) mindestens ein Acrylat-Polymer, Polyurethan-Polymer und/oder einen Polyester als Bindemittel,
(B) mindestens ein Vernetzungsmittel ausgewählt aus der Gruppe der blockierten Polyisocyanate und Aminoplastharze,
(C) mindestens ein Pigment und
(D) mindestens ein organisches Lösemittel ausgewählt aus der Gruppe der Alkyl-Acetate oder Alkyl-Mono-Glykolether mit Alkyl = n-Pentyl oder n-Hexyl,
wobei der Festkörper des Beschichtungsmittels mindestens 35 Gew.-% beträgt.

Beschichtungsmittel mit einem Festkörperanteil von 35 % und mehr werden als High-Solid-Beschichtungsmittel bezeichnet. Dementsprechend handelt es sich bei dem erfindungsgemäßen pigmentierten Beschichtungsmittel um ein High-Solid-Beschichtungsmittel.

Das oben genannte pigmentierte Beschichtungsmittel wird anfolgend auch als erfindungsgemäßes Beschichtungsmittel bezeichnet und ist dementsprechend Gegenstand der vorliegenden Erfindung. Bevorzugte Ausführungen des erfindungsgemäßen Beschichtungsmittels sind der weiter unten folgenden Beschreibung zu entnehmen.

Weiterhin Gegenstand der vorliegenden Erfindung ist ein Verfahren zur Herstellung einer Mehrschichtlackierung, bei dem
(1) mindestens ein Basislack auf ein Substrat aufgebracht wird,
(2) aus dem in Stufe (1) aufgebrachten Basislack ein Polymerfilm gebildet wird,
(3) auf die so erhaltene Basislackschicht mindestens ein Klarlack aufgebracht wird und anschließend
(4) die Basislackschicht zusammen mit dem in Stufe (3) aufgebrachten Klarlack gehärtet wird,
dadurch gekennzeichnet, dass als Basislack ein erfindungsgemäßes Beschichtungsmittel eingesetzt wird.

Ebenfalls Gegenstand der vorliegenden Erfindung ist eine Mehrschichtlackierung, die nach dem erfindungsgemäßen Verfahren hergestellt wurde.

Die Erfindung umfasst zudem Substrate, insbesondere solche aus Metall und/oder Kunststoff, die mit der erfindungsgemäßen Mehrschichtlackierung lackiert worden sind.

Ein weiterer Aspekt der Erfindung ist die Verwendung des erfindungsgemäßen Beschichtungsmittels zur Automobilserienlackierung, zur Nutzfahrzeug- und Autoreparatur-Lackierung, für die Beschichtung von Bauteilen für den Schiff- und Flugzeugbau oder von Bauteilen für Haushalts- und Elektrogeräte oder deren Teile.

Überraschenderweise wurden gefunden, das das erfindungsgemäße Beschichtungsmittel die Nachteile des Standes der Technik nicht länger aufweist, sondern das es bei Einsatz zur Herstellung von Mehrschichtlackierungen trotz geringer Schichtdicken von Klarlackschichten sehr gute optische Gesamteindrücke (Appearance) dieser Mehrschichtlackierungen ermöglicht. Die erfindungsgemäßen Mehrschichtlackierungen, die unter Einsatz des erfindungsgemäßen Beschichtungsmittels hergestellt werden, erfüllen die üblicherweise an eine Automobillackierung gestellten technologischen und anwendungstechnischen Anforderungen und werden trotzdem unter umweltfreundlichen Bedingungen hergestellt.

### Ausführliche Beschreibung der Erfindung

Die erfindungsgemäßen Mehrschichtlackierungen sind bevorzugt so aufgebaut, dass auf einem Substrat zunächst eine Grundierung aufgetragen worden ist. Darüber befindet sich bevorzugt mindestens eine Füllerlackierung eines Füllers sowie mindestens eine Basislackierung eines Basislacks und darüber mindestens eine Klarlackierung eines Klarlacks. Bevorzugt wird von den genannten Beschichtungsmitteln genau eines eingesetzt.

Bei dem oben genannten Schichtaufbau handelt es sich um den gängig im Bereich der Automobillackierung eingesetzten Schichtaufbau. Die erfindungsgemäße Mehrschichtlackierung ist demnach bevorzugt eine Automobilmehrschichtlackierung.

Aus dem oben Gesagten folgt, dass im Rahmen des erfindungsgemäßen Verfahrens bevorzugt vor dem Auftragen des Basislacks eine Grundierung sowie ein Füller aufgetragen werden. Diese werden bevorzugt vor dem Auftrag des Basislacks wie weiter unten beschrieben jeweils separat gehärtet. Im Rahmen des erfindungsgemäßen Verfahrens wird das erfindungsgemäße Beschichtungsmittel jedenfalls als Basislack eingesetzt. Es kann aber beispielsweise auch zusätzlich als Füller eingesetzt werden.

Die Substrate sind üblicherweise mit einer Grundierung versehen, die mit den üblichen Verfahren, wie Elektrotauchlackierung, Tauchen, Rakeln, Spritzen, Walzen oder ähnlichem, appliziert werden. Bevorzugt wird die Grundierung zumindest teilweise oder vollständig, insbesondere vollständig, ausgehärtet, bevor Füller, Basis-und Klarlack appliziert werden. Die Aushärtung der Grundierung erfolgt üblicherweise durch Erhitzen auf eine Temperatur zwischen 80 und 170 °C für eine Zeit von 3 bis 30 min.

Die erfindungsgemäße Mehrschichtlackierung wird vorzugsweise auf Substraten aus Metall und/oder Kunststoff, bevorzugt aus Metall, hergestellt.

Auf die Grundierung werden dann mindestens ein Füller, mindestens ein Basislack und mindestens ein Klarlack aufgetragen.

Füller, Basislack und Klarlack werden mittels üblicher Verfahren zur Applikation von flüssigen Beschichtungsmitteln, wie beispielsweise Tauchen, Rakeln, Spritzen, Walzen oder ähnlichem, insbesondere aber mittels Spritzen, appliziert. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Besonders vorteilhaft ist es, einen Basislack in einem ersten Auftrag durch ESTA und einem zweiten Auftrag pneumatisch zu applizieren.

Vorzugsweise wird der Füller zumindest teilweise oder vollständig, bevorzugt vollständig, ausgehärtet, bevor Basis- und Klarlack appliziert werden. Die Aushärtung des Füllers erfolgt üblicherweise durch Erhitzen auf eine Temperatur zwischen 80 und 170 °C für eine Zeit von 3 bis 30 min. Der applizierte Basislack wird vorzugsweise kurz abgelüftet oder kurz getrocknet, im Allgemeinen bei einer Temperatur zwischen 20 und kleiner 100 °C für eine Zeit von 1 bis 15 min. Danach wird der Klarlack appliziert.

Der applizierte Basislack und der applizierte Klarlack werden gemeinsam thermisch gehärtet. Sofern der Klarlack auch noch mit aktinischer Strahlung härtbar ist, erfolgt noch eine Nachhärtung durch Bestrahlung mit aktinischer Strahlung.

Die Aushärtung kann nach einer gewissen Ruhezeit erfolgen. Sie kann eine Dauer von 30 sec bis 2 h, vorzugsweise 1 min bis 1 h und insbesondere 1 bis 45 min haben. Die Ruhezeit dient beispielsweise dem Verlauf und zur Entgasung der Lackschichten oder zum Verdunsten von flüchtigen Bestandteilen. Die Ruhezeit kann durch die Anwendung erhöhter Temperaturen bis 90 °C und/oder durch eine reduzierte Luftfeuchte kleiner 10 g Wasser/kg Luft unterstützt und/oder verkürzt werden, sofern hierbei keine Schädigungen oder Veränderungen der Lackschichten eintreten, etwa eine vorzeitige Vernetzung.

Die Aushärtung erfolgt üblicherweise bei einer Temperatur zwischen 90 und 160 °C während einer Zeit von 5 bis 90 min.

Die angegebenen Temperaturen verstehen sich jeweils als Objekttemperaturen des beschichteten Substrats.

Für die Trocknung beziehungsweise Konditionierung der nassen Basislackierung sowie der nassen Klarlackierung werden bevorzugt thermische und/oder Konvektionsverfahren verwendet, wobei übliche und bekannte Vorrichtungen wie Durchlauföfen, NIR- und IR-Heizstrahler, Gebläse und Blastunnel eingesetzt werden. Diese Vorrichtungen können auch miteinander kombiniert werden.

Bei den erfindungsgemäßen Mehrschichtlackierungen weist die Basislackierung im Allgemeinen eine Trockenfilmschichtdicke von bevorzugt 3 bis 40 Mikrometern, insbesondere bevorzugt von 5 bis 30 Mikrometern, und ganz bevorzugt 7 bis 25 Mikrometern auf. Die Klarlackierung kann im Allgemeinen eine Trockenfilmschichtdicke von vorzugsweise 10 bis 60 Mikrometern, darunter bevorzugt bis zu 55 Mikrometern, insbesondere bis zu 45 Mikrometern, ganz besonders bevorzugt bis zu 40 Mikrometern aufweisen. Besonders bevorzugt sind Bereiche von 25 bis 55 Mikrometern, insbesondere von 30 bis 45 Mikrometern und ganz besonders vorteilhaft von 35 bis 40 Mikrometern.

Bei den eingesetzten weiteren Beschichtungsmitteln, das heißt den Grundierungen, den Füllern, den möglicherweise weiteren Basislacken und den Klarlacken, insbesondere den Klarlacken, kann es sich um die dem Fachmann in diesem Zusammenhang bekannten, in der Regel im Handel erhältlichen Beschichtungsmittel handeln. Bei den Klarlacken handelt es sich vorzugsweise um lösemittelbasierte Klarlacke, die bevorzugt einen Festkörperanteil von mindestens 50 %, bezogen auf das Gesamtgewicht des Klarlacks, besitzen. Solche Klarlacke werden im Rahmen der Erfindung auch als High-Solid-Klarlacke bezeichnet.

### Komponente (A)

Das erfindungsgemäße pigmentierte Beschichtungsmittel kann thermisch gehärtet werden und enthält demzufolge mindestens ein wie anfolgend beschriebenes Polymer (A) als Bindemittel.

Im Rahmen der vorliegenden Erfindung bedeutet "thermisch härtbar" beziehungsweise der Begriff "thermische Härtung" die durch chemische Reaktion von reaktiven funktionellen Gruppen stattfindende Vernetzung einer Lackschicht (Bildung eines Beschichtungsfilms), wobei die energetische Aktivierung dieser chemischen Reaktion durch thermische Energie möglich ist. Dabei können unterschiedliche komplementäre funktionelle Gruppen miteinander reagieren und/oder die Filmbildung beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeilen 24, bekannt. Bei dieser Vernetzung kann es sich um eine Selbstvernetzung und/oder eine Fremdvernetzung handeln. Sind beispielsweise die komplementären reaktiven oder autoreaktiven funktionellen Gruppen bereits in einem als Bindemittel eingesetzten Polymer vorhanden, liegt eine Selbstvernetzung vor. Eine Fremdvernetzung liegt beispielsweise vor, wenn ein Polymer enthaltend bestimmte funktionelle Gruppen mit einem davon verschiedenen, gegebenenfalls ebenfalls polymeren Vernetzungsmittel reagiert, wobei dann das Vernetzungsmittel reaktive funktionelle Gruppen enthält, die zu den in dem eingesetzten organischen Polymer vorhandenen reaktiven funktionellen Gruppen komplementär sind. Es ist auch möglich, dass ein Polymer als Bindemittel sowohl selbstvernetzende als auch fremdvernetzende funktionelle Gruppen aufweist und dann mit Vernetzungsmitteln kombiniert wird.

Das erfindungsgemäße pigmentierte Beschichtungsmittel enthält mindestens ein Acrylat-Polymer, Polyurethan-Polymer und/oder einen Polyester als Bindemittel (A).

Bei diesen Polymeren als Bindemittel handelt es sich, wie dem Fachmann bekannt ist, beispielsweise um statistisch, alternierend und/oder blockartig aufgebaute lineare und/oder verzweigte und/oder kammartig aufgebaute (Co)Polymerisate von ethylenisch ungesättigten Acrylat-Monomeren (Acrylat-Polymere) sowie Polyadditionsharze (Polyurethan-Polymere) und Polykondensationsharze (Polyester). Ergänzend wird auf Römpp Lexikon Lacke und Druckfarben, Seite 457, Stichworte "Polyaddition" und "Polyadditionsharze (Polyaddukte)", sowie Seiten 463 und 464, Stichworte "Polykondensate", "Polykondensation" und "Polykondensationsharze", sowie Seiten 73 und 74, Stichwort "Bindemittel", verwiesen.

Die Acrylat-Polymere bezeichnet man bekanntermaßen auch als (Meth)Acrylat(co)polymerisate, wobei der Ausdruck (Meth)Arylat- klarstellt, dass die Polymere Acrylat- und/oder Methacrylat-Monomere enthalten oder aus solchen Monomeren bestehen.

Von den genannten Polymeren (A) als Bindemitteln weisen die Acrylat-Polymere und die Polyester, insbesondere die Acrylat-Polymere, besondere Vorteile auf und werden deshalb besonders bevorzugt verwendet.

Vorzugsweise enthalten die Polymere (A) als Bindemittel Thio-, Hydroxyl-, N-Methylolamino-N-Alkoxymethylamino-, Imino-, Carbamat-, Allophanat und/oder Carboxylgruppen, bevorzugt Hydroxyl- oder Carboxylgruppen. Ganz besonders bevorzugt sind Hydroxylgruppen. Über diese funktionellen Gruppen kann dann beispielsweise eine Vernetzung mit Komponenten, die weitere funktionelle Gruppen wie vorzugsweise Anhydrid-, Carboxyl-, Epoxy-, blockierte Isocyanat-, Urethan-, Methylol-, Methylolether, Siloxan-, Carbonat-, Amino-, Hydroxy- und/oder beta-Hydroxyalkylamidgruppen, bevorzugt Epoxy-, beta-Hydroxyalkylamid-, blockierte Isocyanat-, Urethan- oder Alkoxymethylaminogruppen, enthalten, stattfinden. Insbesondere wird eine derartige Vernetzung mit den weiter unten beschriebenen Vernetzungsmitteln (B) und damit die fremdvernetzende thermische Härtung des erfindungsgemäßen pigmentierten Beschichtungsmittels ermöglicht.

Im Falle von beispielsweise anteilig selbstvernetzenden Beschichtungsmitteln können die Bindemittel (A) insbesondere auch Methylol-, Methylolether- und/oder N-Alkoxymethylaminogruppen enthalten.

Komplementäre reaktive funktionelle Gruppen, die für die Verwendung in den Beschichtungsmitteln der erfindungsgemäßen Mehrschichtlackierung besonders gut geeignet sind, sind Hydroxylgruppen einerseits und blockierte Isocyanat-, Urethan- oder Alkoxymethylaminogruppen andererseits.

Die Funktionalität der Polymere (A) als Bindemittel bezüglich der vorstehend beschriebenen reaktiven funktionellen Gruppen kann sehr breit variieren und richtet sich insbesondere nach der Vernetzungsdichte, die erzielt werden soll, und/oder nach der Funktionalität der jeweils angewandten Vernetzungsmittel. Beispielsweise liegt im Falle der bevorzugten hydroxylgruppenhaltigen Polymere (A) als Bindemittel die OH-Zahl vorzugsweise bei 15 bis 300, bevorzugt 20 bis 250, besonders bevorzugt 25 bis 200, ganz besonders bevorzugt 30 bis 150 und insbesondere 35 bis 120 mg KOH/g. Die Bestimmung der OH-Zahl erfolgt im Rahmen der vorliegenden Erfindung gemäß DIN 53240.

Die vorstehend beschriebenen komplementären funktionellen Gruppen können nach den üblichen und bekannten Methoden der Polymerchemie in die Polymere (A) als Bindemittel eingebaut werden. Dies kann beispielsweise durch den Einbau von Monomeren, die entsprechende reaktive funktionelle Gruppen tragen, und/oder mit Hilfe polymeranaloger Reaktionen geschehen.

Geeignete Polymere (A) als Bindemittel weisen beispielsweise ein zahlenmittleres Molekulargewicht von 2000 bis 30000 g/mol, bevorzugt 10000 bis 20000 g/mol auf. Das Molekulargewicht kann jedoch auch geringer oder größer sein. Die Bestimmung des Molekulargewichts erfolgt mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt.

Vorzugsweise werden die Polymere (A) als Bindemittel in einer Menge von 5 bis 35 Gew.-%, bevorzugt von 6 bis 30 Gew.-%, insbesondere bevorzugt von 8 bis 20 Gew.-%, jeweils bezogen auf das Gesamtgewicht des erfindungsgemäßen pigmentierten Beschichtungsstoffs, eingesetzt.

Geeignete Acrylat-Polymere können nach den dem Fachmann bekannten Methoden unter Verwendung der in diesem Zusammenhang bekannten olefinisch ungesättigten Monomere mit reaktiven funktionellen Gruppen (insbesondere Hydroxylgruppen), in der Regel in Kombination mit Monomeren ohne reaktive funktionelle Gruppen, hergestellt werden.

Beispiele geeigneter olefinisch ungesättigter Monomere mit reaktiven funktionellen Gruppen sind:
a) Monomere, welche mindestens eine Hydroxyl-, Amino-, Alkoxymethylamino-, Carbamat-, Allophanat- oder Iminogruppe pro Molekül tragen, wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycyclo-alkylester wie 1,4-Bis(hydroxymethyl)cyclohexan-, Octahydro-4,7-methano-1H-indendimethanol- oder Methylpropandiolmonoacrylat, -monomethacrylat, -monoethacrylat, -monocrotonat, -monomaleinat, -monofumarat oder -monoitaconat; Umsetzungsprodukte aus cyclischen Estern, wie beispielsweise epsilon-Caprolacton und dessen Hydroxyalkyl- oder -cycloalkylestern;
   - olefinisch ungesättigte Alkohole wie Allylalkohol;
   - Polyole wie Trimethylolpropanmono- oder -diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 Kohlenstoff-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 Kohlenstoff-Atomen je Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder -methacrylat;
   - (Meth)Acrylsäureamide, wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)-acrylsäureamid;
   - Acryloyloxy- oder Methacryloyloxyethyl-, propyl- oder butylcarbamat oder -allophanat; weitere Beispiele geeigneter Monomere, welche Carbamatgruppen enthalten, werden in den Patentveröffentlichungen U.S. Pat. No. 3.479.328, U.S. Pat. No. 3.674.838, U.S. Pat. No. 4.126.747, U.S. Pat. No. 4.279.833 oder U.S. Pat. No. 4.340.497 beschrieben.
b) Monomere, welche mindestens eine Säuregruppe pro Molekül tragen, wie
   - Acrylsäure, beta-Carboxyethylacrylat, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzolsulfonsäure (alle Isomere).
c) Epoxidgruppen enthaltende Monomere, wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere der vorstehend beschriebenen Art werden im Allgemeinen nicht oder nur in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate, führen.

Beispiele geeigneter olefinisch ungesättigter Monomere ohne reaktive funktionelle Gruppen sind unter anderem Alkylester der Acrylsäure, Methacrylsäure oder einer anderen alpha,beta-olefinisch ungesättigten Carbonsäure, vinylaromatische Verbindungen sowie Mischungen dieser Monomeren.

Die ebenfalls als Polymere (A) einsetzbaren Polyurethan-Polymere werden beispielsweise in dem Fachmann bekannter Weise erhalten durch Umsetzung
- mindestens eines Polyols, ausgewählt aus der Gruppe, bestehend aus Polyester- und Polyetherpolyolen, bevorzugt mit einem zahlenmittleren Molekulargewicht von 10000 bis 20000 g/mol, und
- mindestens eines Polyisocyanats sowie
- gegebenenfalls mindestens einer Verbindung, enthaltend mindestens eine isocyanatreaktive funktionelle Gruppe und mindestens eine (potentiell) anionische Gruppe im Molekül,
- gegebenenfalls mindestens einer weiteren Verbindung, enthaltend mindestens eine isocyanatreaktive funktionelle Gruppe und
- gegebenenfalls mindestens einer Verbindung eines zahlenmittleren Molekulargewichts von 60 bis 600 g/mol, enthaltend Hydroxyl- und/oder Aminogruppen im Molekül.

Derartige Polyurethan-Polymere sind beispielsweise in den europäischen Patentanmeldungen EP 228003 und EP 574417 beschrieben.

Derartige Polyurethan-Polymere werden beispielsweise erhalten, indem als Isocyanat-Komponente im Bereich der Lackindustrie üblicherweise eingesetzte Isocyanate, wie z.B. Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethyl-hexandiisocyanat, Isophorondiisocyanat, 2-Isocyanatopropylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)-cyclohexan oder Tetramethylxylylendiisocyanaten (TMXDI) oder Mischungen aus diesen Polyisocyanaten, bevorzugt Tetramethylxylylen-diisocyanat (TMXDI) und/oder Isophorondiisocyanat, bevorzugt Isophorondiisocyanat, verwendet werden.
Als Kettenverlängerungsmittel mit Hydroxyl- bzw. Aminogruppen werden bevorzugt Trimethylolpropan und Diethanolamin eingesetzt.

Ebenfalls als Polyurethanharze (A) sind sogenannte acrylierte Polyurethanharze geeignet, die in dem Fachmann bekannter Weise erhältlich sind, indem ethylenisch ungesättigte Monomere in Gegenwart eines Polyurethanharzes polymerisiert werden. Dabei ist es möglich, Polyurethanharze ohne Doppelbindungen und/oder Polyurethanharze mit Doppelbindungen einzusetzen.

Als Bindemittel können auch acrylierte Polyurethanharze mit seitenständigen und/oder endständigen Doppelbindungen, insbesondere mit Seiten- und/oder endständigen Ethenylarylengruppen, eingesetzt werden.

Die acrylierten Polyurethanharze mit seitenständigen und/oder endständigen Doppelbindungen können erhalten werden durch Umsetzung eines Polyurethanpräpolymers, das mindestens eine freie Isocyanatgruppe enthält, mit einer Verbindung, die mindestens eine ethylenisch ungesättigte Doppelbindung und eine gegenüber NCO-Gruppen reaktive Gruppe, insbesondere eine Hydroxylgruppe oder eine Aminogruppe, aufweist.

Die acrylierten Polyurethanharze mit seitenständigen und/oder endständigen Doppelbindungen können auch erhalten werden durch Umsetzung eines Polyurethanpräpolymers, das mindestens eine gegenüber NCO-Gruppen reaktive Gruppe, insbesondere mindestens eine Hydroxylgruppe oder eine Aminogruppe, enthält, mit einer Verbindung, die mindestens eine ethylenisch ungesättigte Doppelbindung und eine freie Isocyanatgruppe aufweist.

Als Bindemittel-Polymere (A) können außerdem Propfmischpolymerisate, die erhältlich sind durch Polymerisation von olefinisch ungesättigten, Monomeren in Gegenwart der acrylierten Polyurethanharze mit seitenständigen und/oder endständigen Doppelbindungen, eingesetzt werden.

Insbesondere werden Pfropfmischpolymerisate, die einen hydrophoben Kern aus mindestens einem einpolymerisierten olefinisch ungesättigten Monomeren und eine hydrophile Schale aus mindestens einem hydrophilen acrylierten Polyurethan umfassen, eingesetzt. Geeignet sind aber auch Pfropfmischpolymerisate, die einen hydrophoben Kern aus mindestens einem hydrophoben acrylierten Polyurethan und eine hydrophile Schale aus mindestens einem einpolymerisierten olefinisch ungesättigten Monomeren umfassen.

Geeignete acrylierte Polyurethanharze sowie daraus hergestellte Propfmischpolymerisate sind beispielsweise in der WO 01/25307. Seite 5, Zeile 14, bis Seite 45, Zeile 4, und der EP-B-787 159, Seite 2, Zeile 27, bis Seite 7, Zeile 13, beschrieben.

Die ebenfalls als Polymere (A) geeigneten Polyester können gesättigt oder ungesättigt, insbesondere gesättigt sein. Solche Polyester und deren Herstellung sowie die bei dieser Herstellung einsetzbare Komponenten sind dem Fachmann bekannt und werden beispielsweise in der EP-B-787 159 beschrieben.

Es handelt sich insbesondere um Polymere, die unter Einsatz mehrwertiger organischer Polyole und mehrwertiger organischer Carbonsäuren hergestellt werden. Die Polyole und Polycarbonsäuren werden dabei durch Veresterung, das heißt also durch Kondensationsreaktionen, miteinander verknüpft. Entsprechend werden die Polyester in der Regel der Gruppe der Polykondensationsharze zugeordnet. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Geeignete Diole sind beispielsweise Glykole, wie Ethylenglykol, Propylenglykol, Butylenglykol, Butandiol-1,4, Hexandiol-1,6, Neopentylglykol, und andere Diole, wie 1,4-Dimethylolcyclohexan oder 2-Butyl-2-Ethyl-1,3-Propandiol.

Geeignete höherfunktionelle Alkohole (OH-Funktionalität größer 2) sind beispielsweise Trimethylolpropan, Glycerin und Pentaerythrit.

Die Säurekomponente eines Polyesters umfasst in der Regel Dicarbonsäuren oder ihre Anhydride mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Es können auch höherfunktionelle Carbonsäuren mit 3 oder mehr Carboxylgruppen (beziehungsweise die entsprechenden Anhydride), beispielsweise Trimellithsäureanhydrid eingesetzt werden. Häufig werden auch anteilig Monocarbonsäuren, wie beispielsweise ungesättigte Fettsäuren, verwendet.

Einsetzbare Hydroxycarbonsäuren sind beispielsweise Hydroxycapronsäure, Hydroxybuttersäure, Hydroxydecansäure und/oder 12-Hydroxystearinsäure. Einsetzbare Lactone sind beispielsweise die an sich bekannten beta-, gamma-, delta- und epsilon-Lactone, insbesondere epsilon-Caprolacton.

Neben den oben beschriebenen monomeren Verbindungen können beispielsweise auch bereits polymere Ausgangsprodukte eingesetzt werden, beispielsweise als Diole die an sich bekannten Polyesterdiole, die durch Umsetzung eines Lactons mit einem zweiwertigen Alkohol erhalten werden.

Die beschriebenen Polymere (A) als Bindemittel, das heißt die Acrylat-Polymere, Polyurethan-Polymere und/oder Polyester, können für sich oder auch in Kombination miteinander in dem erfindungsgemäßen Beschichtungsmittel eingesetzt werden.

Neben den Acrylat-Polymeren, Polyurethan-Polymeren und/oder Polyestern (A) können auch weitere Polymere als Bindemittel eingesetzt werden. Entsprechende, im Bereich der Automobilindustrie in pigmentierten Lacken, insbesondere Basislacken, üblicherweise eingesetzte Bindemittel sind dem Fachmann bekannt und können von diesem problemlos ausgewählt werden.

Beispielhaft werden partiell verseifte Polyvinylester als weitere statistisch, alternierend und/oder blockartig aufgebaute lineare und/oder verzweigte und/oder kammartig aufgebaute (Co)Polymerisate von ethylenisch ungesättigten Monomeren genannt. Als weitere Polyadditionsharze und Polykondensationsharze werden beispielhaft Alkyde, Polylactone, Polycarbonate, Polyether, Epoxidharz-Amin-Addukte, Polyharnstoffe, Polyamide oder Polyimide genannt.

### Vernetzungsmittel (B)

Das erfindungsgemäße pigmentierte Beschichtungsmittel enthält ferner mindestens ein Vernetzungsmittel (B) ausgewählt aus der Gruppe der blockierten Polyisocyanate und Aminoplastharze. Vorteilhaft ist das Vernetzungsmittel (B) ein Aminoplastharz, insbesondere vorteilhaft ein Melamin-Formaldehyd-Harz.

Die blockierten Polyisocyanate können dabei prinzipiell auf jeglichen dem Fachmann in diesem Zusammenhang bekannten organischen Verbindungen mit mindestens zwei Isocyanatgruppen pro Molekül basieren, beispielsweise auf den weiter oben im Rahmen der Beschreibung der Polyurethan-Polymere genannten Polyisocyanaten. Insbesondere können auch die bekannten Trimere der genannten Polyisocyanate (Isocyanurate) eingesetzt werden. Bevorzugt ist trimeres Hexamethylendiisocyanat. Typische Blockierungsmittel sind in diesem Zusammenhang beispielsweise Phenole, Alkohole, Oxime, Pyrazole, Amine und CH-acide Verbindungen. Bevorzugt sind Blockierungsmittel mit einer Deblockierungstemperatur kleiner 130 °C. Bevorzugte Blockierungsmittel sind beispielsweise Caprolactam, Butanonoxim, Acetonoxim, Malonsäurediethylester, Dimethylpyrazol oder Phenol. Die Blockierungsreaktion wird typischerweise durch Umsetzung der freien NCO-Gruppen mit den genannten Blockierungsmitteln in Anwesenheit von Katalysatoren wie beispielsweise Dibutylzinndilaurat oder Zinn(II)bis(2-ethylhexanoat) durchgeführt. Die Blockierungsmittel und die entsprechenden Umsetzungsreaktionen sind dem Fachmann bekannt. Ein besonders bevorzugtes blockiertes Polyisocyanat ist Dimethylpyrazol-blockiertes trimeres Hexamethylendiisocyanat.

Als Aminoplastharze kommen die im Bereich der Lackindustrie üblicherweise eingesetzten Aminoplastharze zum Einsatz. Bevorzugt werden mit Methanol und/oder Butanol veretherte Melamin-Formaldehyd-Harz, beispielsweise die im Handel unter den Bezeichnungen Cymel®, Resimene®, Maprenal® und Luwipal® erhältlichen Produkte, insbesondere Resimene® 747 und Resimene® 755, eingesetzt.

Der Gehalt an Vernetzungsmittel beträgt bevorzugt 5 bis 30 Gew.-% und besonders bevorzugt 7 bis 20 Gew.-%, jeweils bezogen auf das Gesamtgewicht des erfindungsgemäßen pigmentierten Beschichtungsstoffs.

### Pigment (C)

Das erfindungsgemäße pigmentierte Beschichtungsmittel enthält zudem mindestens ein Pigment. Pigmente sind bekanntermaßen pulver- und/oder plättchenförmige Farbmittel, die gängig in Beschichtungsmitteln eingesetzt werden.

Vorzugsweise wird das Pigment aus der Gruppe bestehend aus organischen und anorganischen, bevorzugt anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Besonders bevorzugt enthält das erfindungsgemäße pigmentierte Beschichtungsmittel mindestens ein effektgebendes Pigment, bevorzugt mindestens ein Metallplättchenpigment. Neben dem oder den effektgebenden Pigmenten kann das erfindungsgemäße pigmentierte Beschichtungsmittel auch noch mindestens ein oder mehrere weitere Pigmente, beispielsweise farbgebende Pigmente, enthalten.

Beispiele geeigneter Effektpigmente, die auch farbgebend sein können, sind Metallplättchenpigmente, insbesondere Aluminiumplättchenpigmente, wie handelsübliche Edelstahlbronzen, insbesondere handelsübliche Aluminiumbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Seite 176, Stichwort "Effektpigmente" und Seiten 380 und 381, Stichworte "Metalloxid-Glimmer-Pigmente" bis "Metallpigmente" verwiesen.

Insbesondere werden Aluminiumbronzen beziehungsweise Aluminiumplättchenpigmente eingesetzt. Eingesetzt werden dabei sowohl unbehandelte Typen, die beispielsweise unter dem Namen Stapa® Metallux (Firma Eckart) im Handel erhältlich sind, als auch behandelte Typen, insbesondere silanisierte Typen, die beispielsweise in der WO 01/81483 beschrieben sind und beispielsweise unter dem Namen Hydrolan® (Firma Eckart) im Handel erhältlich sind.

Vorzugsweise weist das Metallplättchenpigment eine Dicke von 200 bis 2000 nm und insbesondere 500 bis 1500 nm, auf.

Bevorzugt hat das Metallplättchenpigment eine mittlere Teilchengröße von 10 bis 50 und insbesondere von 13 bis 25 Mikrometern (ISO 13320-1 nach Cilas (Gerät 1064)).

Geeignete organische und/oder anorganische farbgebende Pigmente sind die in der Lackindustrie üblicherweise eingesetzten Pigmente.

Beispiele für geeignete anorganische farbgebende Pigmente sind Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, Stichworte "Eisenblau-Pigmente" bis "Eisenoxidschwarz", Seiten 451 bis 453, Stichworte "Pigmente" bis "Pigmentvolumenkonzentration", Seite 563, Stichwort "Thioindigo-Pigmente", Seite 567, Stichwort "Titandioxid-Pigmente", Seiten 400 und 467, Stichwort "Natürlich vorkommende Pigmente", Seite 459, Stichwort "Polycyclische Pigmente", Seite 52, Stichworte "Azomethinpigmente", "Azopigmente", und Seite 379, Stichwort "Metallkomplex-Pigmente", verwiesen.

Der Gehalt an den Pigmenten kann sehr breit variieren und richtet sich in erster Linie nach der Tiefe der Farbe und/oder der Intensität des Effekts, die eingestellt werden sollen, sowie nach der Dispergierbarkeit der Pigmente in den erfindungsgemäßen pigmentierten Beschichtungsmitteln. Bevorzugt liegt der Anteil an Pigmenten bei 0,5 bis 50 Gew.-%, insbesondere bevorzugt bei 0,5 bis 40 Gew.-%, ganz besonders bevorzugt bei 1 bis 30 Gew.-%, besonders vorteilhaft 2 bis 20 Gew.-%, jeweils bezogen auf das Gesamtgewicht des Beschichtungsmittels.

Sofern es sich bei dem erfindungsgemäßen Beschichtungsmittel um einen Füller handelt, liegt der Pigmentgehalt bevorzugt bei 0,5 bis 49 Gew.-%, bezogen auf das Gesamtgewicht des Beschichtungsmittels. Im Falle von Unilacken ist ein Pigmentgehalt von 1 bis 49 Gew.-%, bezogen auf das Gesamtgewicht des Beschichtungsmittels, bevorzugt. Handelt es sich um einen im Rahmen der vorliegenden Erfindung bevorzugten Basislack, vorzugsweise um einen Metallic-Basislack, liegt der Pigmentgehalt bevorzugt bei 0,5 bis 40 Gew.-%, bevorzugt 1 bis 30 Gew.-%, besonders bevorzugt bei 2 bis 20 Gew.-%, jeweils bezogen auf das Gesamtgewicht des Lacks.

### Organische Lösemittel (D)

Das erfindungsgemäße pigmentierte Beschichtungsmittel enthält mindestens ein organisches Lösemittel (D). Dabei handelt es sich um ein Alkyl-Acetat oder einen Alkyl-Mono-Glykolether mit Alkyl = n-Pentyl oder n-Hexyl, nämlich n-Pentylacetat, n-Hexylacetat, n-Pentylglykol und n-Hexylglykol. Vorteilhaft ist genau eines der genannten Lösemittel enthalten. Für den Erhalt der erfindungsgemäßen Vorteile des pigmentierten Beschichtungsmittels, insbesondere dem Erhalt eines hervorragenden optischen Gesamteindrucks von Mehrschichtlackierungen, die unter Einsatz des pigmentierten Beschichtungsmittels hergestellt wurden, ist die Anwesenheit des Lösemittels (D) essentiell.

Das organische Lösemittel (D) ausgewählt aus der Gruppe der Alkyl-Acetate oder Alkyl-Mono-Glykolether mit Alkyl = n-Pentyl oder n-Hexyl wird in den erfindungsgemäßen Beschichtungsmitteln bevorzugt in einer Menge von 1 bis 10 Gew.-%, insbesondere bevorzugt von 3 bis 7 Gew.-%, jeweils bezogen auf das Gesamtgewicht des Beschichtungsmittels, eingesetzt.

Neben dem speziellen organischen Lösemittel (D) können noch weitere, von dem Lösemittel (D) verschiedene organische Lösemittel (L) in dem erfindungsgemäßen pigmentierten Beschichtungsmittel enthalten sein. Bevorzugt sind noch weitere Lösemittel (L) enthalten. Als weitere Lösemittel geeignet sind alle üblicherweise in der Lackindustrie eingesetzten Lösemittel, beispielsweise von dem Lösemittel (D) verschiedene Alkohole, von dem Lösemittel (D) verschiedene Glykolether, von dem Lösemittel (D) verschiedene Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Butylglykolacetat, Butanol, Dipropylenglykolmethylether, Glykolsäurebutylester, Xylol, Toluol, Shellso® T, Pine Oel 90/95, Solventnaphtha®, Shellsol® A, Solvesso, Benzin 135/180.

Der Gehalt an weiteren Lösemitteln (L) wird bevorzugt so gewählt, dass das pigmentierte Beschichtungsmittel insgesamt einen Lösemittelanteil (Lösemittel (D) und weitere Lösemittel (L)) von 40 bis 65 Gew.-%, darunter bevorzugt mindestens 45 Gew.-%, insbesondere mindestens 50 Gew.-%, insbesondere vorteilhaft mindestens 55 Gew.-%, jeweils bezogen auf die Gesamtmenge des erfindungsgemäßen pigmentierten Beschichtungsmittels, aufweist. Besonders bevorzugt Bereiche sind von 40 bis 62 Gew.-%, insbesondere 45 bis 62 Gew.-%, besonders bevorzugt 50 bis 62 Gew.-% und ganz besonders vorteilhaft 55 bis 62 Gew.-%, jeweils bezogen auf die Gesamtmenge des erfindungsgemäßen pigmentierten Beschichtungsmittels.

Der Festkörpergehalt des Beschichtungsmittels beträgt mindestens 35 %, bevorzugt 35 bis 60 %, darunter bevorzugt bis zu 55 %, insbesondere bis zu 50 % und besonders vorteilhaft bis zu 45 %. Besonders bevorzugt Bereiche sind von 38 bis 60 %, insbesondere 38 bis 55 %, besonders bevorzugt 38 bis 50 % und ganz besonders vorteilhaft 38 bis 45 %.

Der Festkörperanteil wird im Rahmen der vorliegenden Erfindung, sofern nichts anderes angegeben ist, nach DIN ISO 3251 mit einer Einwaage von 1,0 g Probe, beispielsweise 1,0 g des erfindungsgemäßen Beschichtungsmittels, bei einer Prüfdauer von 60 min und bei einer Temperatur von 125 °C bestimmt.

Unter den genannten Bedingungen weisen bevorzugte erfindungsgemäße pigmentierte Beschichtungsmittel bei 23°C eine Viskosität von 16 s bis 35 s und besonders bevorzugt 18 bis 25 s Auslaufzeit im Ford 3 Cup auf. Im Rahmen der vorliegenden Erfindung wird eine Viskosität in diesem Bereich als Spritzviskosität (Verarbeitungsviskosität) bezeichnet. Bekanntermaßen werden Beschichtungsmittel bei Spritzviskosität appliziert, das heißt sie besitzen unter den dann vorliegenden Bedingungen eine Viskosität, die insbesondere nicht zu hoch ist, um eine effektive Applikation zu ermöglichen. Dies bedeutet, dass die Einstellung der Spritzviskosität wichtig ist, um einen Lack überhaupt durch Spritzverfahren applizieren zu können und um zu gewährleisten, dass sich auf dem zu beschichtenden Substrat ein vollständiger, gleichmäßiger Beschichtungsfilm ausbilden kann. Es ist von besonderem Vorteil, dass der erfindungsgemäße Beschichtungsstoff bei Spritzviskosität einen hohen Festkörper besitzt, sodass keine weitere Verdünnung mit umweltschädlichen organischen Lösemitteln notwendig ist.

Das erfindungsgemäße Beschichtungsmittel ist zudem lösemittelbasiert. Mit lösemittelbasierten Beschichtungsmitteln sind solche gemeint, die als Lösemittel organische Lösemittel enthalten. Dies bedeutet, dass bei der Herstellung des Beschichtungsmittels nicht explizit Wasser zugegeben wird, sondern Wasser beispielsweise lediglich als Restanteil oder Verunreinigung von anderen im Beschichtungsmittel vorhandenen Bestandteilen eingeschleppt wird, beispielsweise durch Restanteile Wasser in organischen Lösemitteln. Insbesondere vorteilhaft ist mit lösemittelbasiert gemeint, dass der Wasseranteil weniger als 2 Gew.-%, bevorzugt weniger als 1 Gew.-%, jeweils bezogen auf das Gesamtgewicht des Beschichtungsmittels, beträgt. Ganz besonders bevorzugt ist das Beschichtungsmittel wasserfrei.

### Weitere Bestandteile

Vorteilhafterweise können in den erfindungsgemäßen Beschichtungsmitteln noch Polymermikroteilchen (M) eingesetzt werden. Geeignete Polymermikroteilchen sind beispielsweise in der EP-A-480 959, Seite 3, Zeile 36, bis Seite 4, Zeile 35, der WO 96/24619, der WO 99/42529, der EP-B-1 173 491, EP-B-1 185 568, WO 03/089487, WO 03/089477, WO 01/72909 und WO 99/42531 beschrieben. Die Polymermikroteilchen können insbesondere zur Steuerung des Verlaufs, des Abdunstverhaltens und des Anlöseverhaltens durch den Klarlack eingesetzt werden.

Geeignete Polymermikroteilchen weisen üblicherweise ein zahlenmittleres Molekulargewicht von 2000 bis 100000 g/mol auf. Die Bestimmung des Molekulargewichts erfolgt mittels GPC-Analyse mit THF (+ 0,1% Essigsäure) als Eluent (1 ml/min) auf einer Styrol-Divinylbenzol-Säulenkombination. Die Kalibrierung wird mit Polystyrol-Standards durchgeführt.

Geeignete Polymermikroteilchen weisen außerdem üblicherweise eine mittlere Teilchengröße von 0,01 bis 10 µm, insbesondere von 0,01 bis 5 µm, und ganz besonders bevorzugt von 0,02 bis 2 µm, nach ISO 13320-1 auf.

Besonders bevorzugt eingesetzte Polymermikroteilchen weisen reaktive funktionelle Gruppen auf, die mit den funktionellen Gruppen des Vernetzungsmittels reagieren können. Insbesondere weisen die Polymermikroteilchen dabei Hydroxylgruppen auf. Hierbei weisen die Polymermikroteilchen bevorzugt eine Hydroxylzahl von 5 bis 150 mg KOH/g nach DIN 53240 auf. Hydroxylgruppenhaltige Polymermikroteilchen sind beispielsweise in der WO 01/72909 beschrieben.

Vernetzte Polymermikroteilchen sind beispielsweise dadurch erhältlich, indem ein Gemisch aus:
(a) einem ethylenisch ungesättigten Monomeren, das eine ethylenisch ungesättigte Gruppe pro Molekül enthält oder ein Gemisch aus solchen Monomeren und
(b) einem ethylenisch ungesättigten Monomeren, das mindestens zwei ethylenisch ungesättigte Gruppen pro Molekül enthält oder ein Gemisch aus solchen Monomeren in einer wässrigen Phase gegebenenfalls in Gegenwart von Emulgatoren oder gegebenenfalls in Gegenwart eines Trägerharzes, bevorzugt einem Polyester, polymerisiert und die auf diese Weise erhaltene wässrige Polymermikroteilchendispersion anschließend in ein organisches Lösemittel oder ein Gemisch aus organischen Lösemitteln überführt wird.

Bevorzugt sind Polymermikroteilchen, die unter Verwendung von ionischen und/oder polaren Gruppen, vorzugsweise Hydroxylgruppen und/oder Carboxylgruppen, enthaltenden Komponenten hergestellt worden sind. Die Komponenten (a) und (b) sollen in der Regel zwischen 1 und 20 Gew.-%, bevorzugt zwischen 3 und 15 Gew.-% ionische und/oder polare Gruppen enthalten.

Um ausreichend vernetzte Polymermikroteilchen zu erhalten, reicht es in der Regel aus, auf ein Mol der Komponente (a) 0,25 bis 1,2 Mol, bevorzugt 0,3 bis 1 Mol der Komponente (b) einzusetzen.

Die in den Basislacken eingesetzten Polymermikroteilchen (M) können aber auch direkt in organischer Phase hergestellt werden.

Bevorzugt eingesetzte Polymermikroteilchen sind beispielsweise dadurch erhältlich, indem ein Gemisch aus:
(c) einem ethylenisch ungesättigten Monomeren (M1), das mindestens eine reaktive Gruppe (G1) pro Molekül enthält oder ein Gemisch aus solchen Monomeren (M1) und
(d) gegebenenfalls einem ethylenisch ungesättigten Monomeren (M2), das mindestens eine, von (G1) verschiedene, reaktive Gruppe (G2) pro Molekül enthält oder ein Gemisch aus solchen Monomeren (M2) und
(e) gegebenenfalls einem weiteren ethylenisch ungesättigten Monomeren (M3) oder ein Gemisch aus solchen Monomeren (M3)
einer Polymerisation in einem organischen Lösemittel gegebenenfalls in Gegenwart eines Trägerharzes, bevorzugt einem Polyester, unterworfen wird.

Geeignete Monomere (M1) sind beispielsweise Monomere, die Hydroxylgruppen, Carbamatgruppen, Aminogruppen, Alkoxymethyl-aminogruppen, Allophanatgruppen oder Iminogruppen, insbesondere Hydroxylgruppen, als reaktive Gruppen enthalten.

Die Monomeren (M1) mit den reaktiven Gruppen (G1) können dabei auch durch Reaktion zweier Verbindungen, von denen eine erste Verbindung eine reaktive Gruppe und mindestens eine ethylenisch ungesättigte Doppelbindung und die andere Verbindung eine mit den reaktiven Gruppen der ersten Verbindung reaktive Gruppe und gegebenenfalls eine ethylenisch ungesättigte Doppelbindung aufweist, hergestellt werden.

Geeignete Monomere (M2) sind beispielsweise Monomere, die Carboxylgruppen enthalten.

Geeignete Monomere (M3) sind die üblicherweise eingesetzten, sogenannten Neutralmonomere, also ethylenisch ungesättigte Monomere, die keine reaktiven Gruppen aufweisen.

Die Polymermikroteilchen (M) können in den Basislacken der erfindungsgemäßen Mehrschichtlackierung beispielsweise in einer Menge von 3 bis 30 Gew.-%, insbesondere von 4 bis 20 Gew.-%, jeweils bezogen auf das Gesamtgewicht des Basislacks, eingesetzt werden.

In einer besonderen Ausführungsform der vorliegenden Erfindung umfasst das erfindungsgemäße Beschichtungsmittel, sofern die beschriebenen polymeren Mikroteilchen vorhanden sind, einen summierten Anteil von den oben beschriebenen Bindemitteln (A) und den Mikroteilchen (M) ((A) + (M)) von 10 bis 35 Gew.-%, insbesondere 12 bis 30 Gew.-%, jeweils bezogen auf die Gesamtmenge der Beschichtungsmittels. Dabei liegt das Gewichtsverhältnis von (A) zu (M) bevorzugt zwischen 1 und 2, insbesondere zwischen 1,2 und 1,8.

Außer den vorstehend beschriebenen Komponenten kann der Basislack übliche und bekannte Hilfs- und Zusatzstoffe in üblichen Mengen enthalten, bevorzugt 0,5 bis 40 Gew.-% und besonders bevorzugt 0,5 bis 30 Gew.-%, insbesondere 0,5 bis 15 Gew.-%, jeweils bezogen auf das Gesamtgewicht des jeweiligen Lacks.

Beispiele für geeignete Hilfs- und Zusatzstoffe sind organische und anorganische Füllstoffe, beispielsweise Talkum oder pyrogene Kieselsäuren, und/oder sowie weitere übliche Hilfs- und Zusatzstoffe, wie beispielsweise Antioxidantien, Entlüftungsmittel, Netzmittel, Katalysatoren, Dispergiermittel, Emulgatoren, Rheologiehilfsmittel wie Verlaufsmittel, Verdickungsmittel, Antiablaufmittel und Thixotropiermittel, Wachse, Slipadditive, Reaktivverdünner, Rieselhilfen, Sikkative, Bioziden, Additive zur Verbesserung der Untergrundbenetzung, Additive zur Verbesserung der Oberflächenglätte, Mattierungsmittel, Radikalfänger, Lichtschutzmittel, vorzugsweise die oben beschriebenen UV-Absorber mit einem Absorptionsmaximum unter 370 nm und/oder HALS, Korrosionsinhibitoren, Flammschutzmittel oder Polymerisationsinhibitoren, wie sie in dem Buch "Lackadditive" von Johan Bielemann, Wiley-VCH, Weinheim, New York, 1998, im Detail beschrieben werden. Bevorzugte Hilfs- und Zusatzstoffe sind Rheologiehilfsmittel, Entlüftungsmittel, Netzmittel, Dispergiermittel, UV-Absorber und Radikalfänger. Besonders bevorzugte Hilfs- und Zusatzstoffe sind UV-Absorber und Netzmittel sowie Füllstoffe, unter denen pyrogene Kieselsäuren bevorzugt sind.

In einer besonders bevorzugten Ausführung enthält das erfindungsgemäße Beschichtungsmittel einen summierten Anteil von 12 bis 30 Gew.-% von wie oben beschriebenen Bindemitteln (A) und Polymermikroteilchen (M), wobei ganz besonders bevorzugt das Gewichtsverhältnis von (A) zu (M) zwischen 1,2 und 1,8 liegt, 7 bis 20 Gew.-% mindestens eines Vernetzungsmittels (B), 3 bis 20 Gew.-% mindestens eines Pigments (C), 1 bis 10 Gew.-% mindestens eines speziellen Lösemittels (D) sowie weitere organische Lösemittel (L) in einer solchen Menge, dass das erfindungsgemäße Beschichtungsmittel eine Gesamtmenge ((D) + (L)) von 40 und 65 Gew.-% aufweist. Die angegebenen Gewichtsanteile sind jeweils in Bezug auf das gesamte Beschichtungsmittel angegeben.

Im Folgenden wird die Erfindung anhand von Beispielen weiter erläutert.

### Beispiele

### Herstellung der erfindungsgemäßen und Vergleichs-Basislacke V-1 bis V-12

Die erfindungsgemäßen und Vergleichs-Basislacke V-1 bis V-12 basieren auf dem anfolgend beschriebenen und aus der Patentanmeldung DE 10 2006 053 776 A1 bekannten Metallic-Basislack P1.

### 1. Herstellung des Basislacks P1

### 1.1 Herstellung eines Acrylat-Polymers (A) als Bindemittel

In einem Reaktor werden 13,239 Gew.-Teile Solvesso 100 vorgelegt und auf 167 °C erhitzt. Der Reaktor wird unter Druck gesetzt 0,35 bar und über einen Zeitraum von 4 h simultan mit einer Monomerenmischung bestehend aus 2,149 Gew.-Teilen Acrylsäure, 10,765 Gew.-Teilen Hydroxyethylacrylat, 11,484 Gew.-Teilen 2-Ethylhexylacrylat, 11,484 Gew.-Teilen Butylacrylat und 14,353 Gew.-Teilen Styrol und einer Initiatormischung bestehend aus 0,719 Gew.-Teilen Ditert.-Butylperoxid und 11,120 Gew.-Teilen einer Lösung von Dicumylperoxid in Solvesso 100 (50%-ig), versetzt. Anschließend wird 1 h bei oben genannter Temperatur und Druck gehalten, bevor über einen Zeitraum von 1 h 21,530 Gew.-Teile Epsilon-Caprolacton zugegeben werden. Es wird auf 150 °C abgekühlt und 1,5 h bei einem Druck von 0,35 bar gehalten. Das Reaktionsgemisch wird abgekühlt und mit Solvesso 100 auf einen Festkörper von 75 % eingestellt. Das so erhaltene Acrylatharz weist eine Säurezahl von 23 mg KOH/g und eine OH-Zahl von 73 mg KOH/g, jeweils bezogen auf den Festkörper, auf.

### 1.2 Herstellung einer Paste eines Aluminiumeffektpigmentes (C)

Die Paste wird aus 40 Gewichtsteilen einer handelsüblichen non-leafing Aluminiumeffektpigmentpaste vom Silberdollar-Typ mit einer mittleren Teilchengröße von 14 Mikrometern (Metallux 2192 der Firma Eckart), 45 Gewichtsteilen Butylglykolacetat und 15 Gewichtsteile des unter 1.1. beschriebenen Acrylat-Polymers (A) als Bindemittel unter Rühren hergestellt.

### 1.3 Herstellung weiterer Bestandteile

### a) Herstellung polymerer Mikroteilchen

In einem Reaktor werden zunächst 5,762 Gew.-Teile Xylol, 5,762 Gew.-Teile Toluol, 0,179 Gew.-Teile Methansulfonsäure vorgelegt und auf 104 °C erhitzt. Anschließend werden 80,615 Gew.-Teile 12-Hydroxystearinsäure dem Reaktor zugefahren und bei 171 °C im Rückfluss unter Entzug des Reaktionswassers gekocht. Die Reaktion ist bei Erreichung einer Säurezahl von 35 beendet. Nach Abkühlen des so hergestellten Trägerharzes wird der Festkörper mit Solventnaphtha auf 80 Gew.-Teile eingestellt.

Anschließend werden in einem Reaktor 43,16 Gew.-Teile Solventnaphtha, 0,08 Gew.-Teile N,N-Dimethylcocosamin und 1,00 Gew.-Teile Ethylacetat vorgelegt und auf 104 °C erhitzt. Der Reaktor wird unter Druck von 0,69 bar gesetzt und innerhalb von 2 h simultan mit einer Monomerenmischung bestehend aus 27,63 Gew.-Teilen Methylmethacrylat, 3,85 Gew.-Teilen 2-Hydroxypropylmethacrylat, 0,83 Gew.-Teilen Glycidylmethacrylat, 12,81 Gew.-Teilen des oben beschriebenen Trägerharzes, 1,51 Gew.-Teilen Methacrylsäure und 1,52 Gew.-Teilen Octylmercaptan und einer Initiatormischung bestehend aus 2,28 Gew.-Teilen Tert.-Butylperoxy-2-ethylhexanoat und 5,13 Gew.-Teilen Solventnaphtha versetzt. Anschließend wird 3 h bei oben genannter Temperatur und Druck gehalten, bevor abgekühlt und mit Solventnaphtha auf einen Festkörper von 41 % eingestellt wird. Die so erhaltenen Polymermikroteilchen weisen eine Säurezahl von 10 mg KOH/g und eine OH-Zahl von 48 mg KOH/g, jeweils bezogen auf den Festkörper, auf.

### b) Herstellung stabilisierter anorganischer Teilchen

In einer Vorlage werden 10,00 Gew.-Teile des unter 1.1. beschriebenen Acrylat-Polymers als Bindemittels, 6,00 Gew.-Teile Degussa Aerosil® 380 (handelsübliche hydrophile pyrogene Kieselsäure der Firma Degussa AG mit einer spezifischen Oberfläche (BET) von 380 m²/g, einer mittleren Größe der Primärteilchen von 7 nm und einem SiO₂-Gehal von >= 99,8 Gew.-%, bezogen auf die geglühte Substanz), 41,7 Gew.-Teile Solventnaphta, 41,7 Gew.-Teile Butylacetat und 0,6 Gew.-Teile eines Fettsäureesters als Stabilisierungsmittel mit einem nichtflüchtigen Anteil von 96,2 % bei 2 h 130 °C, einer OH-Zahl von 50 mg KOH/g und einer Säurezahl von 17,2 mg KOH/g, jeweils bezogen auf den 130 ° C-Festkörpergehalt, enthaltend 6-Hydroxycapronsäure, Hydroxyvaleriansäure, Laurinsäure und Polyethylenglykol (beispielsweise das handelsübliche Benetzungsadditiv auf Basis von Fettsäureestern Solsperse® 39000 der Firma Th. Goldschmidt) gemischt und dispergiert.

### c) Herstellung einer Wachsdispersion

6,00 Gew.-Teile des Polyethylenwachses EVA 1 von der BASF AG (= handelsübliches Polyethylenwachs auf Basis eines Ethylen/Vinylacetat-Copolymeren mit einem Schmelzpunkt von 87-92 °C, einem Tropfpunkt nach Ubbelohde von ca. 95 °C und einem massenmittleren Molekulargewicht (viskosimetrisch) von ca. 6500 g/mol) und 40,00 Gew.-Teile Xylol werden unter langsames Rühren bei 100 °C gelöst. Unter weiterem Rühren lässt man die Lösung auf 70 °C abkühlen und gibt langsam 54,00 Gew.-Teile Butylacetat (technisch, ca. 85 %ig) zu, wobei eine erwünschte Wachsfällung beginnt. Unter weiterem Rühren lässt man die Dispersion weiter bis auf 35 °C abkühlen.

Der Basislack P1 wird durch Vermischen der folgenden Bestandteile in der angegebenen Reihenfolge und Homogenisieren der resultierenden Mischungen hergestellt:
- 19 Gew.-Teile der unter 1.3, c) beschriebenen Wachsdispersion,
- 18 Gew.-Teile der unter 1.3 a) beschriebenen Polymermikroteilchen,
- 15,0 Gew.-Teile der unter 1.3 b) beschriebenen stabilisierten anorganischen Teilchen,
- 11,0 Gew.-Teile des unter 1.1. beschriebenen Bindemittels (A),
- 13,2 Gew.-Teile eines handelsüblichen, monomeren Hexamethoxymethyl-Melaminharzes (B) (Handelsprodukt Maprenal® MF 900 der Firma Surface Specialities Germany GmbH & Co. KG),
- 0,5 Gew.-Teile eines handelsüblichen Benetzungsadditivs auf Basis eines aminharzmodifizierten Acrylcopolymers ohne Siliconzusätze mit einer Viskosität von 150-280 mPa s bei 23 °C (Kegel/Platte, Scherrate 25 s⁻¹ und einem Wirkstoffgehalt von 70 % (Handelsprodukt Additol XL 480 der Firma Cytec Surface Specialities),
- 1,5 Gew.-Teile eines handelsüblichen, sauren, Amin neutralisierten Katalysators auf Basis Dodecylbenzosulfonsäure (Handelsprodukt Nacure® 5225 der Firma King Industries Speciality Chemicals),
- 18 Gew.-Teile der unter 1.2 beschriebenen Paste eines Aluminiumeffektpigments (C),
   3,8 Gew.-Teile Butanol.

Der Basislack P1 besitzt einen Festkörpergehalt (1 h, 120 °C) von 39,8% und hat dabei eine Viskosität von 23-24 s Auslaufzeit im Ford 3 Cup (Spritzviskosität).

### 2. Herstellung weiterer Basislacke

Bei der Herstellung der gemäß folgender Tabelle 1 spezifizierten Basislacke wurde analog der oben genannten Herstellung des Basislacks P1 vorgegangen, wobei jedoch jeweils 5 Gew.-% des bei der Herstellung des Basislacks P1 eingesetzten Butylacetats durch dieselbe Menge des jeweils angegebenen Lösemittels ersetzt wurden. Dies bedeutet also, dass der in Tabelle angegebene Basislack V-5 dem oben genannten Basislack P1 entspricht.

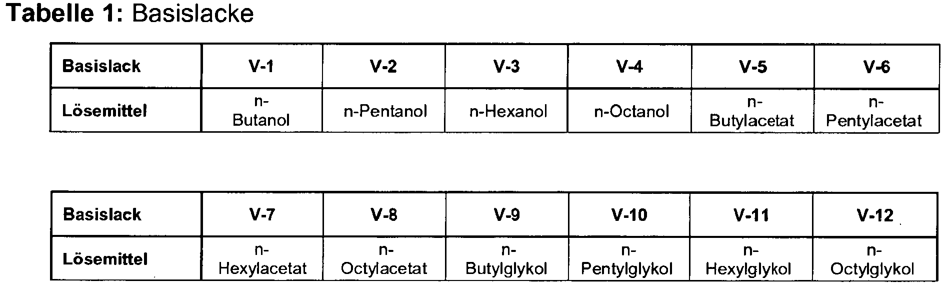

V-1 bis V-5, V-8, V-9 und V-12 sind die Vergleichs-Basislacke,
V-6, V-7, V-10 und V-11 sind die erfindungsgemäßen Basislacke mit Zusatz eines organischen Lösemittels ausgewählt aus der Gruppe der Alkylacetate oder Alkyl-Glykolether mit Alkyl = n-Pentyl oder n-Hexyl.

Die Vergleichs- und erfindungsgemäßen Basislacke V-1 bis V-4 und V-6 bis V-12 haben ebenso wie der Vergleichs-Basislack V-5 eine Spritzviskosität von 23-24 s Ford Cup 3-Auslaufbecher und einen Festkörpergehalt (1 h, 120 °C) zwischen 39 und 40 %.

### Herstellung der Vergleichs- und erfindungsgemäßen Mehrschichtlackierungen F-1 bis F-13

Für die Prüfung der Verlaufs-Eigenschaften wurden zunächst Mehrschichtlackierungen unter Einsatz der Basislacke F-1 bis F-12 in üblicher und bekannter Weise auf Prüftafeln der Abmessungen 30 x 20 cm hergestellt. Hierzu wurden KTL-beschichtete Prüftafeln mit einem handelsüblichen konventionellen, grauen Füller auf Polyester-Basis der Firma BASF Coatings AG beschichtet, wonach die resultierenden Füllerschichten für 5 min bei 20°C und einer relativen Luftfeuchtigkeit von 65% abgelüftet und in einem Umluftofen für 5 min bei 165°C Objekttemperatur eingebrannt wurden.

Nach dem Abkühlen der Prüftafeln auf 20 °C wurden in einer ersten Serie die Basislacke V-1 bis V-12 durch ESTA-Spritzautomatenapplikation aufgetragen, sodass nach der später erfolgenden Härtung eine Trockenfilmschichtdicke von 17-19 Mikrometern entsprechend dem Deckvermögen resultiert. Anschließend wurden die Basislackschichten während 5 Minuten vertikal abgelüftet und mit einem handelsüblichen High-Solid-1-Komponenten-Klarlack der Firma BASF Coatings AG überschichtet, sodass nach der folgenden Härtung eine Trockenfilmschichtdicke von 37-39 Mikrometern resultiert. Hiernach wurden die Basislackschichten und die überschichteten Klarlackschichten für 10 Minuten bei 140°C Objekttemperatur gemeinsam eingebrannt. Es resultierten die Vergleichs- und erfindungsgemäßen Mehrschichtlackierungen F-1 bis F-12.

Als weitere Vergleichs-Mehrschichtlackierung wurde zusätzlich F-13 hergestellt, wobei dabei der Vergleichs-Basislack V-5 mit einer höheren Klarlack-Schichtdicke von 52 Mikrometern (resultierende Trockenschichtdicke) appliziert wurde.

In Tabelle 2 sind nochmals die Basislack- und Klarlack-Schichtdicken der Vergleichs-Mehrschichtlackierungen F-1 bis F-5, F-8, F-9, F-12 und F-13 sowie die der erfindungsgemässen Mehrschichtlackierungen F-6, F-7, F-10 und F-11 zusammengefasst.

**Tabelle 2: Basislack- und Klarlack-Schichtdicken der Vergleichs- und erfindungsgemäßen Mehrschichtlackierungen F-1 bis F-13 ***

| **Mehrschicht-Lackierung** | **F-1** | **F-2** | **F-3** | **F-4** | **F-5** | **F-6** | **F-7** | **F-8** | **F-9** | **F-10** | **F-11** | **F-12** | **F-13** |
|---|---|---|---|---|---|---|---|---|---|---|---|---|---|
| **Basislack-Schichtdicke** | 17 | 18 | 19 | 18 | 17 | 18 | 17 | 19 | 18 | 18 | 19 | 17 | 18 |
| **Klarlack-Schichtdicke** | 38 | 39 | 39 | 38 | 37 | 38 | 37 | 39 | 38 | 38 | 39 | 37 | 52 |

| | | | | | | | | | | | | | |
|---|---|---|---|---|---|---|---|---|---|---|---|---|---|
| * Angaben in Mikrometern | | | | | | | | | | | | | |

### Prüfung der Vergleichs-Mehrschichtlackierungen F-1 bis F-5, F-8, F-9, F-12 und F-13 sowie die der erfindungsgemässen Mehrschichtlackierungen F-6, F-7, F-10 und F-11

Der Verlauf (CF-Wert) der Vergleichs-Mehrschichtlackierungen F-1 bis F-5, F-8, F-9, F-12 und F-13 sowie die der erfindungsgemässen Mehrschichtlackierungen F-6, F-7, F-10 und F-11 wurden mit Hilfe eines "Wave Scan DOI" Messgeräts der Firma Byk/Gardner bestimmt. Höhere Werte entsprechen dabei einem besseren Verlauf.

**Tabelle 3: CF-Werte der Vergleichs- und erfindungsgemäßen Mehrschichtlackierungen F-1 bis F-13**

| **Mehrschicht-Lackierung** | **F-1** | **F-2** | **F-3** | **F-4** | **F-5** | **F-6** | **F-7** | **F-8** | **F-9** | **F-10** | **F-11** | **F-12** | **F-13** |
|---|---|---|---|---|---|---|---|---|---|---|---|---|---|
| CF-Wert | 42 | 47 | 46 | 43 | 50 | 55 | 54 | 51 | 49 | 53 | 54 | 45 | 55 |

Die in der Tabelle 3 zusammengestellten Ergebnisse zeigen deutlich, dass sich für die erfindungsgemäßen Mehrschichtlackierungen F-6, F-7, F-10 und F-11 bei niedrigen Klarlack-Schichtdicken von 37-39 Mikrometern deutlich höhere CF-Werte ergeben als bei den Vergleichs-Mehrschichtlackierungen F-1 bis F-5, F-8, F-9 und F-12. Die erhaltenen CF-Werte der erfindungsgemäßen Mehrschichtlackierungen F-6, F-7, F-10 und F-11 liegen auf dem Niveau von Mehrschichtlackierungen, die unter Einsatz von bekannten Basislacken (V-5) und mit Klarlack-Schichtdicken von über 50 Mikrometern erhalten werden (Vergleichs-Mehrschichtlackierung F13).

Die erfindungsgemäßen Beschichtungsmittel und Mehrschichtlackierungen haben demnach den Vorteil, dass bei deutlich niedrigeren Klarlackschichtdicken trotzdem ein optisch hochwertiger Gesamteindruck (Appearance) erzielt wird. Die erfindungsgemäßen Systeme erfüllen demnach die Qualitätsanforderungen der Automobilindustrie und ermöglichen gleichzeitig eine enorme Einsparung von Material und Lösemittelemission. Entsprechend deutlich zeigt sich der Vorteil der erfindungsgemäßen Systeme hinsichtlich Kosteneinsparung und Umweltbewusstsein.

## Patentansprüche

1. Lösemittelbasiertes pigmentiertes Beschichtungsmittel enthaltend
(A) mindestens ein Acrylat-Polymer, Polyurethan-Polymer und/oder einen Polyester als Bindemittel,
(B) mindestens ein Vernetzungsmittel ausgewählt aus der Gruppe der blockierten Polyisocyanate und Aminoplastharze,
(C) mindestens ein Pigment und
(D) mindestens ein organisches Lösemittel ausgewählt aus der Gruppe der Alkyl-Acetate oder Alkyl-Mono-Glykolether mit Alkyl = n-Pentyl oder n-Hexyl,
wobei der Festkörper des Beschichtungsmittels mindestens 35 Gew.-% beträgt.

2. Pigmentiertes Beschichtungsmittel nach Anspruch 1, **dadurch gekennzeichnet, dass** das Polymer (A) eine OH-Zahl von 15 bis 300 mg KOH/g aufweist.

3. Pigmentiertes Beschichtungsmittel nach Anspruch 1 oder 2, **dadurch gekennzeichnet, dass** mindestens ein Acrylat-Polymer als Polymer (A) enthalten ist.

4. Pigmentiertes Beschichtungsmittel nach einem der Ansprüche 1 bis 3, **dadurch gekennzeichnet, dass** mindestens ein Aminoplastharz als Vernetzungsmittel (B) enthalten ist.

5. Pigmentiertes Beschichtungsmittel nach einem der Ansprüche 1 bis 4, **dadurch gekennzeichnet, dass** mindestens ein Aluminiumplättchenpigment als Pigment (C) enthalten ist.

6. Pigmentiertes Beschichtungsmittel nach einem der Ansprüche 1 bis 5, **dadurch gekennzeichnet, dass** 1 bis 10 Gew.-%, bezogen auf das Gesamtgewicht des Beschichtungsmittels, des mindestens einen Lösemittels (D) enthalten ist.

7. Pigmentiertes Beschichtungsmittel nach einem der Ansprüche 1 bis 6, **dadurch gekennzeichnet, dass** noch mindestens ein weiteres, von (D) verschiedenes Lösemittel enthalten ist.

8. Verfahren zur Herstellung einer Mehrschichtlackierung, bei dem
(1) mindestens ein Basislack auf ein Substrat aufgebracht wird,
(2) aus dem in Stufe (1) aufgebrachten Basislack ein Polymerfilm gebildet wird,
(3) auf die so erhaltene Basislackschicht mindestens ein Klarlack aufgebracht wird und anschließend
(4) die Basislackschicht zusammen mit dem in Stufe (3) aufgebrachten Klarlack gehärtet wird,
**dadurch gekennzeichnet, dass** als Basislack ein Beschichtungsmittel nach einem der Ansprüche 1 bis 7 eingesetzt wird.

9. Verfahren nach Anspruch 8, **dadurch gekennzeichnet, dass** vor dem Aufbringen des Basislacks zunächst mindestens eine Grundierung und dann mindestens ein Füller aufgebracht werden.

10. Verfahren nach Anspruch 8 oder 9, **dadurch gekennzeichnet, dass** als Substrat ein metallisches Substrat oder ein Kunststoffsubstrat eingesetzt wird.

11. Mehrschichtlackierung, die nach einem Verfahren gemäß einem der Ansprüche 8 bis 10 herstellt wurde.

12. Mehrschichtlackierung nach Anspruch 11, **dadurch gekennzeichnet, dass** der Basislack eine Trockenschichtdicke von 3 bis 40 Mikrometern aufweist.

13. Mehrschichtlackierung nach Anspruch 11 oder 12, **dadurch gekennzeichnet, dass** der Klarlack eine Trockenschichtdicke von 10 bis 40 Mikrometern aufweist.

14. Mehrschichtlackierung nach Anspruch 13, **dadurch gekennzeichnet, dass** der Klarlack eine Trockenschichtdicke von 35 bis 40 Mikrometern aufweist.

15. Substrat, das mit einer Mehrschichtlackierung nach einem der Ansprüche 11 bis 14 beschichtet ist.

## Claims

1. Solvent-based pigmented coating composition comprising
(A) at least one acrylate polymer, polyurethane polymer and/or a polyester as binder,
(B) at least one crosslinking agent selected from the group of the blocked polyisocyanates and amino resins,
(C) at least one pigment and
(D) at least one organic solvent selected from the group of the alkyl acetates or alkyl monoglycol ethers with alkyl = n-pentyl or n-hexyl,
the solids content of the coating composition being at least 35% by weight.

2. Pigmented coating composition according to Claim 1, **characterized in that** the polymer (A) has an OH number of 15 to 300 mg KOH/g.

3. Pigmented coating composition according to Claim 1 or 2, **characterized in that** it comprises at least one acrylate polymer as polymer (A).

4. Pigmented coating composition according to any of Claims 1 to 3, **characterized in that** it comprises at least one amino resin as crosslinking agent (B).

5. Pigmented coating composition according to any of Claims 1 to 4, **characterized in that** it comprises at least one aluminum flake pigment as pigment (C).

6. Pigmented coating composition according to any of Claims 1 to 5, **characterized in that** it comprises 1% to 10% by weight, based on the total weight of the coating composition, of the at least one solvent (D).

7. Pigmented coating composition according to any of Claims 1 to 6, **characterized in that** it further comprises at least one other solvent, different from (D).

8. Process for producing a multicoat paint system, in which
(1) at least one basecoat material is applied to a substrate,
(2) a polymer film is formed from the basecoat material applied in stage (1),
(3) at least one clearcoat material is applied to the resultant basecoat film and subsequently
(4) the basecoat film is cured together with the clearcoat material applied in stage (3),
**characterized in that** a coating composition according to any of Claims 1 to 7 is used as basecoat material.

9. Process according to Claim 8, **characterized in that** first at least one primer and then at least one primer-surfacer are applied before the basecoat material is applied.

10. Process according to Claim 8 or 9, **characterized in that** a metallic substrate or a plastic substrate is used as substrate.

11. Multicoat paint system produced by a process according to any of Claims 8 to 10.

12. Multicoat paint system according to Claim 11, **characterized in that** the basecoat has a dry film thickness of 3 to 40 micrometers.

13. Multicoat paint system according to Claim 11 or 12, **characterized in that** the clearcoat has a dry film thickness of 10 to 40 micrometers.

14. Multicoat paint system according to Claim 13, **characterized in that** the clearcoat has a dry film thickness of 35 to 40 micrometers.

15. Substrate coated with a multicoat paint system according to any of Claims 11 to 14.

## Revendications

1. Agent de revêtement pigmenté à base de solvant(s), contenant
(A) au moins un polymère d'acrylate, un polymère de polyuréthane et/ou un polyester comme liant,
(B) au moins un réticulant choisi dans le groupe des polyisocyanates bloqués et des résines d'aminoplaste,
(C) au moins un pigment et
(D) au moins un solvant organique choisi dans le groupe des acétates d'alkyle ou des alkylmonoglycoléthers, alkyle = n-pentyle ou n-hexyle,
les corps solides de l'agent de revêtement représentant au moins 35% en poids.

2. Agent de revêtement pigmenté selon la revendication 1, **caractérisé en ce que** le polymère (A) présente un indice d'OH de 15 à 300 mg de KOH/g.

3. Agent de revêtement pigmenté selon la revendication 1 ou 2, **caractérisé en ce qu'**au moins un polymère d'acrylate est contenu comme polymère (A).

4. Agent de revêtement pigmenté selon l'une quelconque des revendications 1 à 3, **caractérisé en ce qu'**au moins une résine d'aminoplaste est contenue comme agent réticulant (B).

5. Agent de revêtement pigmenté selon l'une quelconque des revendications 1 à 4, **caractérisé en ce qu'**au moins un pigment à plaquettes d'aluminium est contenu comme pigment (C).

6. Agent de revêtement pigmenté selon l'une quelconque des revendications 1 à 5, **caractérisé en ce qu'**il contient 1 à 10% en poids, par rapport au poids total de l'agent de revêtement, dudit au moins un solvant (D).

7. Agent de revêtement pigmenté selon l'une quelconque des revendications 1 à 6, **caractérisé en ce qu'**il contient encore au moins un autre solvant, différent de (D).

8. Procédé pour la production d'un laquage multicouche, dans lequel
(1) au moins une laque de base est appliquée sur un substrat,
(2) un film polymère est formé sur la laque de base appliquée dans l'étape (1),
(3) au moins une laque claire est appliquée sur la couche de laque de base ainsi obtenue et ensuite
(4) la couche de laque de base est durcie ensemble avec la couche de laque claire appliquée dans l'étape (3),
**caractérisé en ce qu'**un agent de revêtement selon l'une quelconque des revendications 1 à 7 est utilisé comme laque de base.

9. Procédé selon la revendication 8, **caractérisé en ce qu'**au moins un apprêt et ensuite au moins une charge sont d'abord appliqués, avant l'application de la laque de base.

10. Procédé selon la revendication 8 ou 9, **caractérisé en ce qu'**on utilise, comme substrat, un substrat métallique ou un substrat en matériau synthétique.

11. Laquage multicouche, qui a été préparé selon un procédé selon l'une quelconque des revendications 8 à 10.

12. Laquage multicouche selon la revendication 11, **caractérisé en ce que** la laque de base présente une épaisseur de couche sèche de 3 à 40 µm.

13. Laquage multicouche selon la revendication 11 ou 12, **caractérisé en ce que** la laque claire présente une épaisseur de couche sèche de 10 à 40 µm.

14. Laquage multicouche selon la revendication 13, **caractérisé en ce que** la laque claire présente une épaisseur de couche sèche de 35 à 40 µm.

15. Substrat, revêtu par un laquage multicouche selon l'une quelconque des revendications 11 à 14.
